# EUROPEAN PATENT SPECIFICATION

(11) **EP 3 893 536 B1**
(45) Date of publication and mention of the grant of the patent: **11.03.2026**
(21) Application number: 20745507.2
(22) Date of filing: 21.01.2020
(51) Int. Cl.: H04L 9/40, H04W 12/08, H04W 28/08, H04W 12/06, H04L 67/14, H04W 12/71

(54) **METHOD, DEVICE, AND SYSTEM FOR INCREASING CROSS-NETWORK ACCESS SECURITY**
VERFAHREN, VORRICHTUNG UND SYSTEM ZUR ERHÖHUNG DER NETZWERKÜBERGREIFENDEN ZUGRIFFSSICHERHEIT
PROCÉDÉ, DISPOSITIF ET SYSTÈME D'AMÉLIORATION DE LA SÉCURITÉ D'ACCÈS INTER-RÉSEAUX

(30) Priority: 21.01.2019 CN 201910055371
(43) Date of publication of application: 13.10.2021
(73) Proprietor: Huawei Technologies Co., Ltd., Shenzhen Guangdong 518129 (CN)
(72) Inventor: GUO, Longhua, Shenzhen, Guangdong 518129 (CN); LI, He, Shenzhen, Guangdong 518129 (CN)
(74) Representative: Maiwald GmbH
(86) International application number: PCT/CN2020/073436
(87) International publication number: WO 2020/151696

(56) References cited:
- CN-A- 103 516 739
- CN-A- 105 991 515
- CN-A- 108 377 493
- US-A1- 2016 050 229
- US-A1- 2017 264 606
- US-A1- 2018 352 483
- US-A1- 2018 352 483
- HUAWEI ET AL: "Security Solution for DDoS attack mitigation in the roaming scenarios between NPN and PLMN", vol. SA WG3, no. Kochi (India); 20190128 - 20190201, 21 January 2019 (2019-01-21), XP051611457, Retrieved from the Internet <URL:http://www.3gpp.org/ftp/tsg%5Fsa/WG3%5FSecurity/TSGS3%5F94%5FKochi/Docs/S3%2D190190%2Ezip> [retrieved on 20190121]
- "3rd Generation Partnership Project; Technical Specification Group Services and System Aspects; Study on security for 5GS enhanced support of Vertical and LAN Services; (Release 16)", 16 November 2018 (2018-11-16), XP051565060, Retrieved from the Internet <URL:http://www.3gpp.org/ftp/Meetings%5F3GPP%5FSYNC/SA3/Docs/S3%2D183826%2Ezip> [retrieved on 20181116]
- 3GPP: "Study on Security for 5GS Enhanced Support of Vertical and LAN Services (Release 16)", 3GPP TR 33.819 V0.3.0, 1 April 2019 (2019-04-01), XP051723259

## Description

This application claims priority to Chinese Patent Application No. 201910055371.2, filed with the Chinese Patent Office on January 21, 2019 and entitled "METHOD, DEVICE, AND SYSTEM FOR ENHANCING CROSS-NETWORK ACCESS SECURITY".

### TECHNICAL FIELD

This application relates to the field of communications technologies, and in particular, to a method, a device, and a system for enhancing cross-network access security.

### BACKGROUND

To meet communications requirements of vertical industries, a 5G communications technology supports non-public networks (Non-Public Networks, NPN). Only an authorized user can access the non-public network, and the authorized user can access both the NPN network and a public land mobile network (public land mobile network, PLMN) network. The 5G communications technology supports features such as roaming, mobility, and service continuity of UE between the NPN and the PLMN network. For example, the UE may access the non-public network via the PLMN network, or access the PLMN network via the non-public network.

US2017/264606A1 describes that a method and apparatus may be configured to determine a network identity that is valid for the first network and a second network, that the method may also include assigning the network identity to a user equipment, that the method may also providing the network identity to one of the second network and a user equipment.

US2016/050229A1 describes a system and method for providing advanced voice services in a wireless communications network, where the system also interfaces to an Internet Protocol (IP) network to perform the advanced voice services for mobile units in the IP network and includes a protection mechanism against Voice-over-IP (VoiP) Denial-of-Service (DoS) attacks utilizing Advanced Group Services (AGS).

In an existing mechanism, the NPN network is deployed based on a 5G system architecture. In a scenario in which the authorized user can access both the NPN network and the PLMN network, credentials (credential) of the NPN network and the PLMN network are configured on the UE. After completing registration with a first network (the PLMN network/NPN network), the UE discovers and selects a non-3GPP interworking function (non-3GPP interworking function, N3IWF) network element in a second network (the NPN network/PLMN network). The UE performs identity authentication and a registration procedure via the N3IWF network element of the second network, and accesses the second network, so that the UE accesses the second network via the first network. If malicious UE keeps initiating authentication requests to the second network via the first network when the malicious UE fails to be authenticated by the second network, a great burden will be imposed on networks of the first network and the second network. If a large quantity of UEs are hijacked and then frequently initiate authentication requests to the second network simultaneously, a distributed denial of service (distributed denial of service, DDoS) attack is prone to occur.

### SUMMARY

Embodiments of this application provide a method, a device, and a system for enhancing cross-network access security. In a scenario in which UE accesses a second network via a first network, in the embodiments of this application, a security event (for example, an authentication status) of the UE is recorded in the second network and a decision result is determined for a subsequent behavior of the UE. The decision result is notified to the first network, to help the first network perform security processing on the subsequent behavior of the UE for the second network, to implement security collaboration between the first network and the second network. Malicious UE is managed near a source in the first network, so that communication load of the first network and the second network is reduced, and network security of the second network is also ensured.

To achieve the foregoing objective, the following technical solutions are used in the embodiments of this application.

The invention and its scope of protection is defined in the appended independent claims. Claim 1 defines a method for enhancing cross-network access security. Claim 8 defines a computer storage medium. Claim 9 defines a system for enhancing cross-network access security. The following aspects and possible designs of the disclosure provide the skilled person with an understanding of how technical subject matters can be combined one with the other,

According to a first aspect, a method for enhancing cross-network access security is provided. The method is used by a terminal to access a second network by using a packet data unit PDU session established in a first network, and the method includes: A session management network element in the first network receives a first request message for the PDU session, where the first request message includes address information of the terminal, an identifier of the second network, and indication information for prohibiting the terminal from accessing the second network; stores, based on the first request message, the information for prohibiting the terminal from accessing the second network; and blocks access of the terminal to the second network. Based on this solution, a session function network element in the first network may store, based on an indication of the second network, the information for prohibiting the terminal from accessing the second network, and block the access of the terminal to the second network, so that the second network can control the access of the terminal to the second network via the first network, and a possible DDoS attack on the second network is avoided.

In a possible design, the information for prohibiting the terminal from accessing the second network includes an identifier of the terminal in the first network and the identifier of the second network. That the session management network element stores, based on the address information of the terminal, the identifier of the second network, and the indication information for prohibiting the terminal from accessing the second network, the information for prohibiting the terminal from accessing the second network is specifically:
determining the identifier of the terminal in the first network based on the address information of the terminal; and
associating the identifier of the terminal in the first network with the identifier of the second network and storing the identifier of the terminal in the first network and the identifier of the second network.

Based on this solution, the session management network element in the first network may locally store the information for prohibiting the terminal from accessing the second network. In this way, when subsequently receiving again a PDU session establishment request initiated by the terminal for accessing the second network, the session management network element in the first network may directly determine, based on the locally stored information for prohibiting the terminal from accessing the second network, that the terminal needs to be blocked from accessing the second network by using the PDU session.

In a possible design, the information for prohibiting the terminal from accessing the second network includes an identifier of the terminal in the first network and the identifier of the second network. That the session management network element stores, based on the address information of the terminal, the identifier of the second network, and the indication information for prohibiting the terminal from accessing the second network, the information for prohibiting the terminal from accessing the second network is specifically:
determining the identifier of the terminal in the first network based on the address information of the terminal; and
storing the information for prohibiting the terminal from accessing the second network in subscription data of the terminal in a UDM network element in the first network, or storing the information for prohibiting the terminal from accessing the second network in a security gateway in the first network.

In other words, the session management network element in the first network may store the information for prohibiting the terminal from accessing the second network on another network element in the first network, for example, the UDM network element, or the security gateway in the first network. The security gateway in the first network may be, for example, a security edge protection proxy (security edge protection proxy, SEPP). The information for prohibiting the terminal from accessing the second network is stored on another network element in the first network, in particular, some global network elements (where the network element serves a plurality of session management network elements in the first network concurrently), so that when a location of the terminal changes, the first network can still accurately learn of the information for prohibiting the terminal from accessing the second network, to accurately block the access of the terminal to the second network.

In a possible design, the blocking access of the terminal to the second network includes: The session management network element sends a second request message for blocking the terminal from accessing the second network to a user plane function network element that serves the PDU session in the first network. The user plane function network element blocks the access of the terminal to the second network based on the second request message. One PDU session may carry a large amount of data/information. In this case, the first network only needs to block data/a message that is in the PDU session of the terminal and that accesses the second network, and does not need to release the entire PDU session. This maintains flexibility of PDU session management.

In a possible design, the blocking access of the terminal to the second network includes: releasing the PDU session. In some cases, the PDU session created by the terminal is specifically used to access the second network. In this case, by releasing the PDU session in time, a resource on a related network element (for example, an AMF network element or an SMF network element) in the first network may be released in time.

In a possible design, when the terminal re-initiates a PDU session establishment request used to access the second network, the session management network element in the first network may block the access of the terminal to the second network based on the information for prohibiting the terminal from accessing the second network. If the session management network element locally stores the information for prohibiting the terminal from accessing the second network, the session management network element directly determines, based on the locally stored information for prohibiting the terminal from accessing the second network, that the terminal needs to be blocked from accessing the second network by using the PDU session. If the session management network element stores the information for prohibiting the terminal from accessing the second network in another network element in the first network, the information for prohibiting the terminal from accessing the second network element needs to be first obtained from the another network element.

In a possible design, the information for prohibiting the terminal from accessing the second network further includes a validity period in which the terminal is prohibited from accessing the second network. Within the validity period, the session management network element in the first network blocks the access of the terminal to the second network via the first network. Specifically, the PDU session establishment request of the terminal may be rejected, where a PDU session that the terminal requests to establish is the PDU session used to access the second network. Alternatively, data/a message that is in the PDU session established by the terminal and that is used to access the second network is blocked.

According to a second aspect, a method for enhancing cross-network access security is provided. The method is used by a terminal to access a second network by using a packet data unit PDU session established in a first network, and the method includes: When authentication of the UE fails, a network element in the second network records a result of the authentication failure; determines, based on the result of the authentication failure, to stop the terminal from accessing the second network; and sends an authentication response to a network element in the first network, where the authentication response includes address information of the terminal and indication information for prohibiting the terminal from accessing the second network.

Based on this solution, when the authentication of the terminal fails, the network element in the second network may indicate the first network to block access of the terminal to the second network, and a possible DDoS attack on the second network is avoided.

In a possible design, the authentication response further includes a validity period in which the terminal is prohibited from accessing the second network. Within the validity period, the access of the terminal to the second network via the first network is blocked, to avoid that a malicious attacker intentionally causes the authentication failure of the terminal by hijacking the terminal, and that the terminal can never access the second network via the first network.

In a possible design, the network element in the second network is a non-3GPP interworking function N3IWF network element.

According to a third aspect, an apparatus for enhancing cross-network access security is provided. The apparatus has a function of implementing the method according to the first aspect. The function may be implemented by hardware, or may be implemented by hardware executing corresponding software. The hardware or the software includes one or more modules corresponding to the foregoing function.

According to a fourth aspect, an apparatus for enhancing cross-network access security is provided, and includes a processor and a memory. The memory is configured to store computer-executable instructions. When the apparatus runs, the processor executes the computer-executable instructions stored in the memory, so that the apparatus performs the method for enhancing cross-network access security according to any design of the first aspect.

According to a fifth aspect, a computer-readable storage medium is provided. The computer-readable storage medium stores instructions. When the instructions are run on a computer, the computer is enabled to perform the method for enhancing cross-network access security according to any design of the first aspect.

According to a sixth aspect, a computer program product including instructions is provided. When the computer program product runs on a computer, the computer is enabled to perform the method for enhancing cross-network access security according to any design of the first aspect.

According to a seventh aspect, an apparatus (for example, the apparatus may be a chip system) is provided. The apparatus includes a processor, configured to support the apparatus in implementing the functions in the first aspect. In a possible design, the apparatus further includes a memory, and the memory is configured to store program instructions and data that are necessary for the apparatus. When the apparatus is the chip system, the apparatus may include a chip, or may include a chip and another discrete device.

For technical effects brought by any one of the design manners of the third aspect to the seventh aspect, refer to technical effects brought by different design manners of the first aspect. Details are not described herein again.

According to an eighth aspect, an apparatus for enhancing cross-network access security is provided. The apparatus has a function of implementing the method in the second aspect. The function may be implemented by hardware, or may be implemented by hardware executing corresponding software. The hardware or the software includes one or more modules corresponding to the foregoing function.

According to a ninth aspect, an apparatus for enhancing cross-network access security is provided, and includes a processor and a memory. The memory is configured to store computer-executable instructions. When the apparatus runs, the processor executes the computer-executable instructions stored in the memory, so that the apparatus performs the method for enhancing cross-network access security according to any design of the second aspect.

According to a tenth aspect, a computer-readable storage medium is provided. The computer-readable storage medium stores instructions. When the instructions are run on a computer, the computer is enabled to perform the method for enhancing cross-network access security according to any design of the second aspect.

According to an eleventh aspect, a computer program product including instructions is provided. When the computer program product runs on a computer, the computer is enabled to perform the method for enhancing cross-network access security according to any design of the second aspect.

According to a twelfth aspect, an apparatus (for example, the apparatus may be a chip system) is provided. The apparatus includes a processor, configured to support a second session management network element in implementing the functions in the second aspect. In a possible design, the apparatus further includes a memory, and the memory is configured to store program instructions and data that are necessary for the apparatus. When the apparatus is the chip system, the apparatus may include a chip, or may include a chip and another discrete device.

For technical effects brought by any one of the design manners of the eighth aspect to the twelfth aspect, refer to technical effects brought by different design manners of the second aspect. Details are not described herein again.

According to a thirteenth aspect, a system for enhancing cross-network access security is provided. The system is used by a terminal to access a second network by using a packet data unit PDU session established in a first network. The second network is used to: when authentication of the UE fails, record a result of the authentication failure; determine, based on the result of the authentication failure, to stop the terminal from accessing the second network; and send an authentication response to the first network, where the authentication response includes address information of the terminal and indication information for prohibiting the terminal from accessing the second network. The first network is used to: receive the authentication response sent in the second network; store the information for prohibiting the terminal from accessing the second network; and block access of the terminal to the second network.

In a possible design, the second network is further used to determine that a quantity of authentication failures of the terminal is greater than a preset threshold.

In a possible design, the first network is further used to release the PDU session.

In a possible design, the first network is further used to block data/a message that is in the PDU session and that is used to access the second network.

In a possible design, the first network is further used to: when the terminal re-initiates a PDU session establishment request used to access the second network, block the access of the terminal to the second network based on the information for prohibiting the terminal from accessing the second network.

In a possible design, the authentication response further includes a validity period in which the terminal is prohibited from accessing the second network; and the information for prohibiting the terminal from accessing the second network further includes the validity period. The first network element is configured to: within the validity period, block the access of the terminal to the second network via the first network.

For technical effects brought by any one of the design manners of the thirteenth aspect, refer to technical effects brought by different design manners of the first aspect or the second aspect. Details are not described herein again.

These aspects or other aspects of this application are clearer and more comprehensible in descriptions of the following embodiments.

### BRIEF DESCRIPTION OF DRAWINGS

FIG. 1 is a schematic flowchart of accessing an NPN by a terminal via a PLMN in the conventional technology;
FIG. 2 is a schematic flowchart of accessing a PLMN by a terminal via an NPN in the conventional technology;
FIG. 3 is a schematic diagram of a system for enhancing cross-network access security according to an embodiment of this application;
FIG. 4 is a schematic diagram of another system for enhancing cross-network access security according to an embodiment of this application;
FIG. 5 is a schematic diagram of another system for enhancing cross-network access security according to an embodiment of this application;
FIG. 6A to FIG. 6C are a schematic flowchart of a method for enhancing cross-network access security according to an embodiment of this application;
FIG. 7A to FIG. 7C are a schematic flowchart of another method for enhancing cross-network access security according to an embodiment of this application;
FIG. 8A to FIG. 8C are a schematic flowchart of another method for enhancing cross-network access security according to an embodiment of this application;
FIG. 9 is a schematic structural diagram of an apparatus for enhancing cross-network access security according to an embodiment of this application;
FIG. 10 is a schematic structural diagram of another apparatus for enhancing cross-network access security according to an embodiment of this application; and
FIG. 11 is a schematic structural diagram of another apparatus for enhancing cross-network access security according to an embodiment of this application.

### DESCRIPTION OF EMBODIMENTS

The following describes technical solutions in embodiments of this application with reference to accompanying drawings in the embodiments of this application. In the descriptions of this application, "/" represents an "or" relationship between associated objects unless otherwise specified. For example, A/B may represent A or B. The term "and/or" in this application indicates only an association relationship for describing associated objects and indicates that three relationships may exist. For example, A and/or B may indicate the following three cases: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof means any combination of the items, including any combination of one item (piece) or a plurality of items (pieces). For example, at least one of a, b, or c may indicate: a, b, c, a and b, a and c, b and c, or a, b, and c, where a, b, and c may be singular or plural. In addition, to clearly describe the technical solutions in the embodiments of this application, terms such as "first" and "second" are used in the embodiments of this application to distinguish between same items or similar items that have basically same functions and purposes. A person skilled in the art may understand that the terms such as "first" and "second" do not constitute a limitation on a quantity or an execution sequence, and that the terms such as "first" and "second" do not indicate a definite difference.

In addition, a network architecture and a service scenario described in the embodiments of this application are intended to describe the technical solutions in the embodiments of this application more clearly, and do not constitute a limitation on the technical solutions provided in the embodiments of this application. A person of ordinary skill in the art may know that with evolution of the network architecture and emergence of a new service scenario, the technical solutions provided in the embodiments of this application are also applicable to a similar technical problem.

In the embodiments of this application, a first network and a second network are two different networks. For example, the first network may be a network of a first operator, and the second network may be a network of a second operator. Alternatively, the first network is a PLMN network, and the second network is an NPN network. Types of the first network and the second network are not limited in the embodiments of this application.

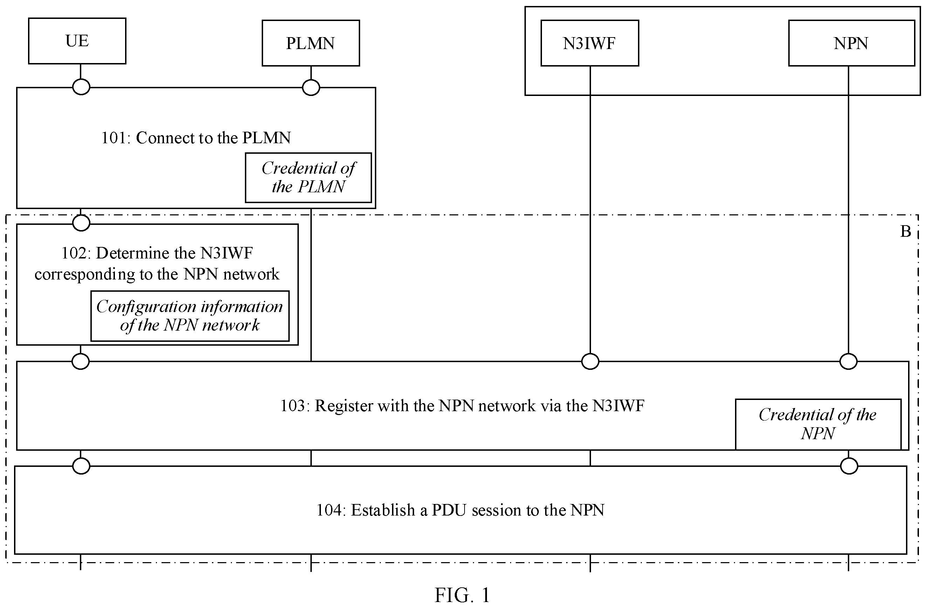

In 3GPP TR23.734, it is proposed that the standard needs to support a service connection between a public land mobile network (PLMN) and a non-public network (NPN) via a gateway similar to a non-3GPP interworking function (N3IWF) network element. FIG. 1 is a schematic flowchart of accessing an NPN network by UE via a PLMN network. In this scenario, optionally, an IP connection is established between a data network accessed by the UE by using a PDU session established in the PLMN network and an N3IWF corresponding to the NPN network.

The UE obtains an IP address by registering with the PLMN network, discovers the N3IWF of the NPN network, and then establishes a connection to the NPN network via the N3IWF. A specific procedure is shown in FIG. 1.

Step 101: The UE connects to the PLMN network.

Optionally, a security credential (credential) for accessing the PLMN network is configured on the UE. The UE discovers, selects, and connects to the PLMN network by using the security credential of the PLMN network. The UE obtains the IP address via the PLMN network. For example, the UE may request, in the PLMN network, to establish the PDU session to the data network, and in a PDU session establishment procedure, a network element (for example, a UPF or an SMF) in the PLMN network allocates the IP address.

Step 202: The UE determines the N3IWF in the NPN network.

Optionally, an IP address or a fully qualified domain name of the N3IWF corresponding to the NPN network is preconfigured on the UE.

Step 203: The UE registers with the NPN network via the N3IWF.

Optionally, a security credential for accessing the NPN network is preconfigured on the UE. The UE accesses the NPN network by using the security credential of the NPN network, and registers with the NPN network via the N3IWF.

Step 204: The UE establishes a PDU session connection to the NPN network.

In step 203, when the UE registers with the NPN network via the N3IWF, the NPN network performs authentication on the UE, and the UE may establish the PDU session to the NPN network via the PLMN network only when the authentication succeeds.

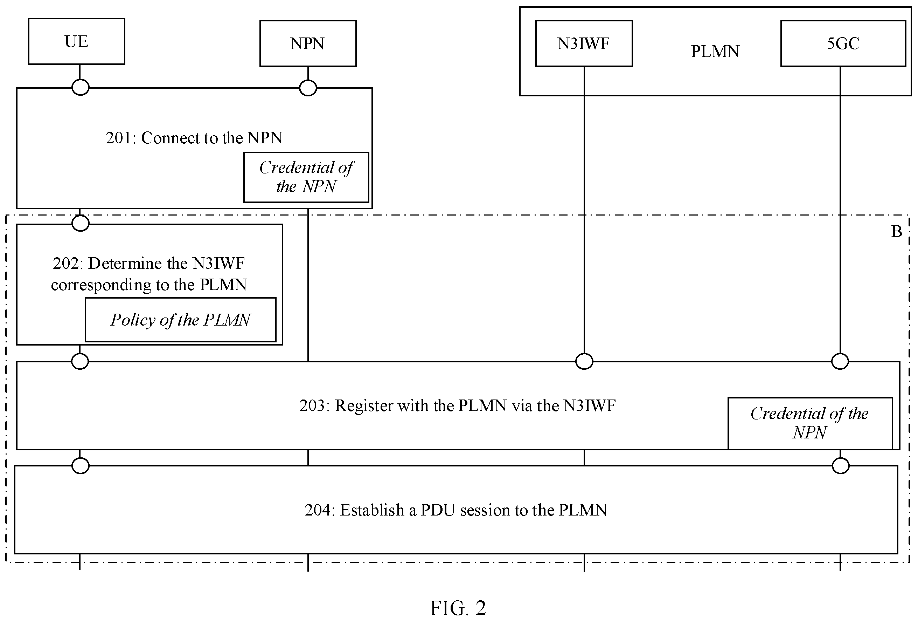

FIG. 2 is a flowchart of accessing a PLMN network by UE via an NPN network. The UE obtains an IP address by registering with the NPN network, discovers an N3IWF of the PLMN network, and then establishes a connection to the PLMN network via the N3IWF. A specific procedure is shown in FIG. 2.

Step 201: The UE connects to the NPN network.

Optionally, a security credential (credential) for accessing the NPN network is configured on the UE. The UE discovers, selects, and connects to the NPN network by using the security credential of the NPN network. The UE obtains the IP address via the NPN network. For example, the UE may request, in the NPN network, to establish a PDU session to a data network, and in a PDU session establishment procedure, a network element (for example, a UPF or an SMF) in the NPN network allocates the IP address.

Step 202: The UE determines the N3IWF in the PLMN network.

Optionally, the UE determines the N3IWF in the PLMN network based on a policy for selecting the N3IWF in the PLMN network. Alternatively, an IP address or a fully qualified domain name of the N3IWF corresponding to the PLMN network is preconfigured on the UE.

Step 203: The UE registers with the PLMN network via the N3IWF.

Optionally, a security credential for accessing the PLMN network is preconfigured on the UE. The UE accesses the PLMN network by using the security credential of the PLMN network, and registers with the PLMN network via the N3IWF.

Step 204: The UE establishes a PDU session connection to the PLMN network.

In step 203, when the UE registers with the PLMN network via the N3IWF, the PLMN network performs authentication on the UE, and the UE may establish the PDU session to the PLMN network via the NPN network only when the authentication succeeds.

With reference to the embodiments of FIG. 1 and FIG. 2, it can be learned that, in a process in which UE in a first network (the PLMN network or the NPN network) accesses a second network (the NPN network or the PLMN network) via the first network, the second network needs to first perform authentication on the UE. The UE may establish a PDU session to the second network via the first network only when the authentication succeeds. If malicious UE continues to initiate an authentication/authentication request to the second network via the first network when authentication/authentication fails, this continuous authentication/authentication procedure affects a network element of the second network. For example, if a large quantity of UEs are hijacked and then frequently initiate authentication/authentication requests to the second network, a DDoS attack is prone to occur.

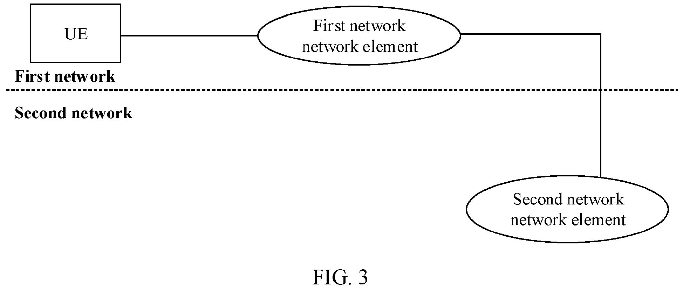

FIG. 3 is a schematic diagram of a system according to an embodiment of this application. The system includes a network element of a first network and a network element of a second network. UE is connected to the second network via the first network. In this embodiment of this application, to reduce a potential attack from the UE in the first network to the second network, in this embodiment of this application, when authentication of a terminal fails, the network element in the second network records a result of the authentication failure; determines, based on the result of the authentication failure, to stop the terminal from accessing the second network; and sends an authentication response to the first network, where the authentication response includes address information of the terminal and indication information for prohibiting the terminal from accessing the second network. The network element in the first network is configured to: receive the authentication response sent in the second network; store the information for prohibiting the terminal from accessing the second network; and block access of the terminal to the second network.

When the UE subsequently accesses the second network again via the first network, the network element in the first network may block the UE from accessing the second network. In this way, a malicious attack on the second network launched by malicious UE via the first network can be avoided.

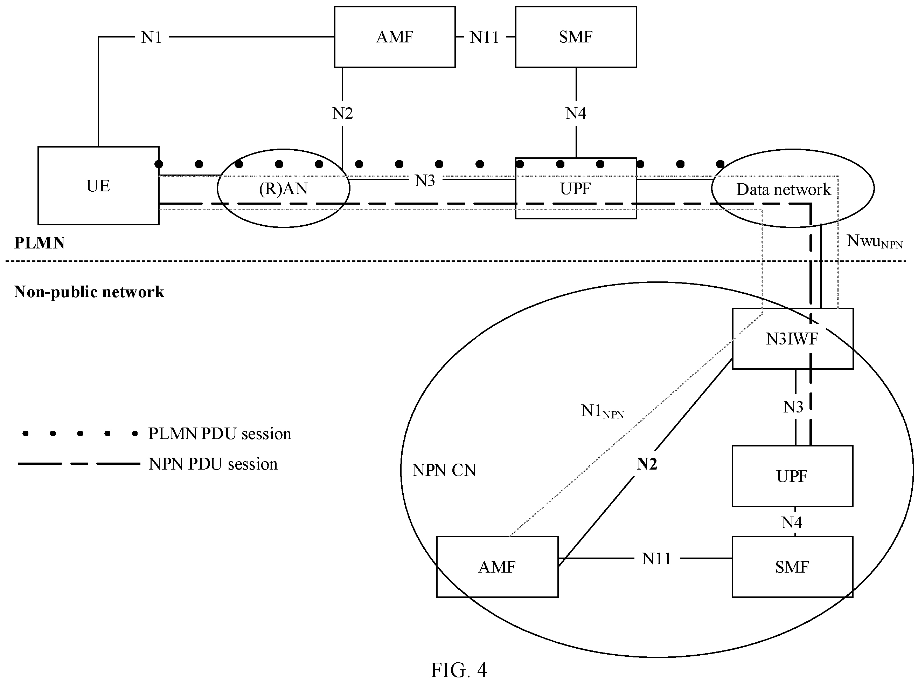

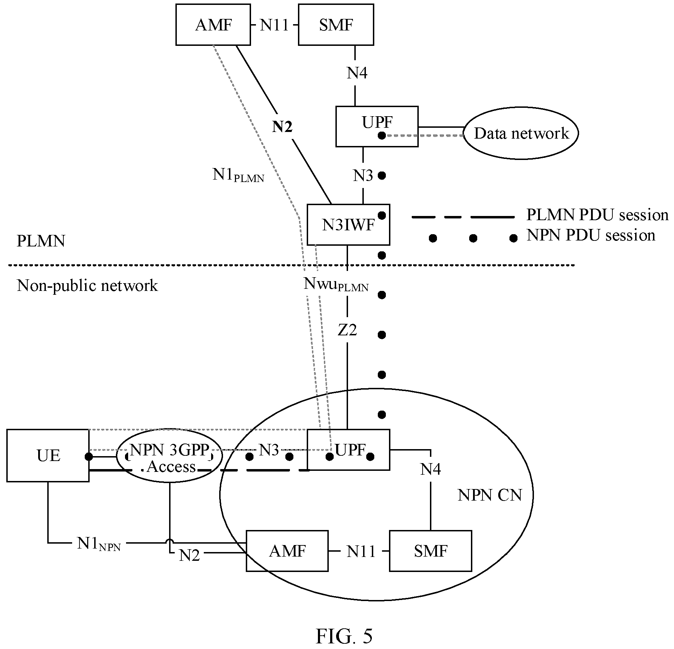

The first network and the second network may be deployed based on a current 5G network or another network architecture in the future. In a possible implementation, both the first network and the second network may be deployed based on a mechanism of a 5G system. FIG. 4 and FIG. 5 are architectural diagrams in which UE accesses an NPN network via a PLMN network and UE accesses the PLMN network via the NPN network respectively.

Optionally, a terminal (terminal) involved in FIG. 4 and FIG. 5 in the embodiments of this application may include various handheld devices with a wireless communication function, vehicle-mounted devices, wearable devices, computing devices, or other processing devices connected to a wireless modem, and may further include a subscriber unit (subscriber unit), a cellular phone (cellular phone), a smartphone (smart phone), a wireless data card, a personal digital assistant (personal digital assistant, PDA) computer, a tablet computer, a wireless modem (modem), a handheld device (handheld), a laptop computer (laptop computer), a cordless phone (cordless phone) or a wireless local loop (wireless local loop, WLL) station, a machine type communication (machine type communication, MTC) terminal, user equipment (user equipment, UE), a mobile station (mobile station, MS), a terminal device (terminal device), or relay user equipment. The relay user equipment may be, for example, a 5G residential gateway (residential gateway, RG). For ease of description, the devices mentioned above are collectively referred to as the terminal in this application.

An access device (wireless/wired access network) in FIG. 4 or FIG. 5 refers to a device that accesses a core network, and may be, for example, a base station, a broadband network service gateway (broadband network gateway, BNG), an aggregation switch, or a non-3rd generation partnership project (3rd generation partnership project, 3GPP) access device. There may be base stations in various forms, for example, a macro base station, a micro base station (also referred to as a small cell), a relay station, and an access point.

A user plane function (User Plan Function, UPF) network element in FIG. 4 or FIG. 5 is a function network element in a user plane, is mainly responsible for connecting to an external network, and includes related functions of a long term evolution (Long Term Evolution, LTE) serving gateway (serving gateway, SGW) and a packet data network gateway (packet data network gateway, PDN-GW). Specifically, the UPF may forward a user data packet according to a routing rule of an SMF. For example, uplink data is sent to a DN or another UPF, and downlink data is forwarded to another UPF or a RAN. A specific data flow may also be controlled. For example, a data packet with specific characteristics (for example, a packet represented by an IP quintuple) is blocked. In the embodiments of this application, the UPF may receive a packet filter (Packet Filter) delivered by the SMF, to block the UE from accessing the second network.

An access and mobility management function (Access and Mobility Management Function) network element shown in FIG. 4 or FIG. 5 is responsible for access management and mobility management of the UE, for example, responsible for UE status maintenance, UE reachability management, forwarding of a non-access stratum (non-access-stratum, NAS) message, and forwarding of a session management (session management, SM) N2 message. During actual application, the AMF network element may implement a mobility management function of an MME in an LTE network framework, and may further implement an access management function.

A session management function (Session Management Function, SMF) network element in FIG. 4 or FIG. 5 is responsible for session management, and allocates and releases a resource for a session of the UE. The resource includes session quality of service (quality of service, QoS), a session path, a forwarding rule, and the like. The SMF or the UPF network element is further configured to allocate an internet protocol (Internet Protocol, IP) address to the UE.

An AUSF network element in FIG. 4 or FIG. 5 is configured to perform security authentication on the UE, for example, authentication/authentication.

An AF network element in FIG. 4 or FIG. 5 may be a third-party application control platform, or may be a device of an operator. The AF network element may provide services for a plurality of application servers.

A UDM network element in FIG. 4 or FIG. 5 may store subscription information of the UE.

A PCF network element in FIG. 4 or FIG. 5 is configured to perform user policy management, and is similar to a policy and charging rules function (policy and charging rules function, PCRF) network element in LTE. The PCF network element is mainly responsible for policy authorization, quality of service, and generation of a charging rule, delivers the corresponding rule to the UPF network element via the SMF network element, and completes installation of the corresponding policy and rule.

It should be noted that, that the AMF, the SMF, the UDM, and the like are referred to as network elements in this embodiment of this application is merely an example. In practice, the network elements may also be referred to as instances or network functional entities. For example, the UDM network element may also be referred to as a UDM instance or a UDM network functional entity. The AMF network element may also be referred to as an AMF instance or an AMF network functional entity.

It should also be noted that, when implementing a function of the UDM network element in this embodiment of this application, the UDM network element may interact with a unified data repository (unified data repository, UDR) network element. The UDR network element is configured to store data required when the UDM network element performs an operation of the UDM network element. The UDM network element is configured to interact with another network element. During actual implementation, the UDR network element and the UDM network element may be two independent physical entities, or the UDR network element may be integrated into the UDM network element. This is not specifically limited in this embodiment of this application.

It may be understood that the foregoing function network elements may be network elements in a hardware device, or may be software functions running on dedicated hardware, or may be virtualization functions instantiated on a platform (for example, a cloud platform).

For example, for ease of description, in subsequent embodiments, an example in which both the first network and the second network are deployed based on the mechanism of the 5G system is used for description.

A method for enhancing cross-network access security provided in the embodiments of this application is specifically described below with reference to accompanying drawings.

It should be noted that, in the following embodiments of this application, a name of a message between network elements or a name or the like of each parameter in the message is merely an example, and may also be another name in specific implementation. This is not specifically limited in this embodiment of this application.

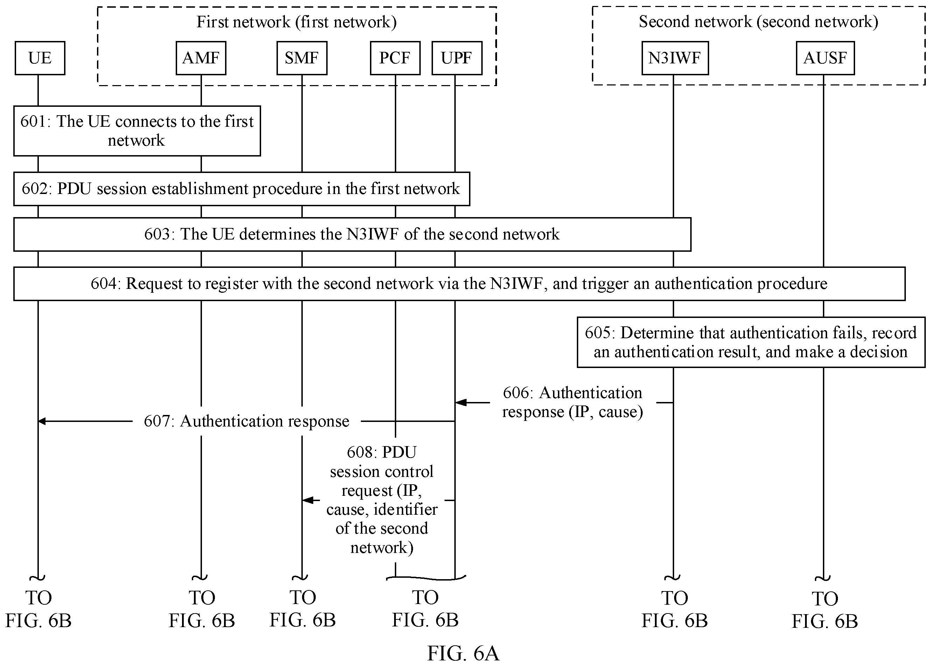

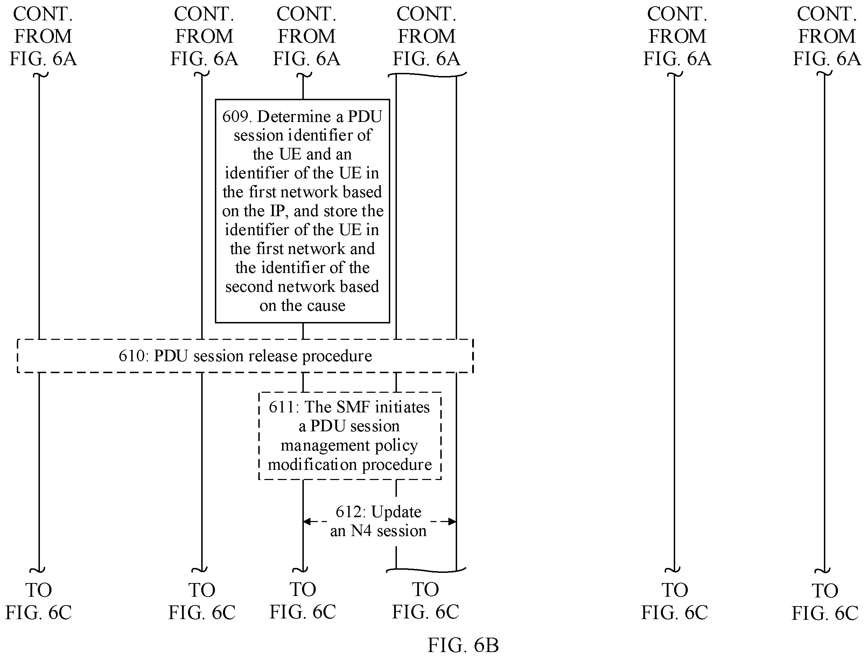

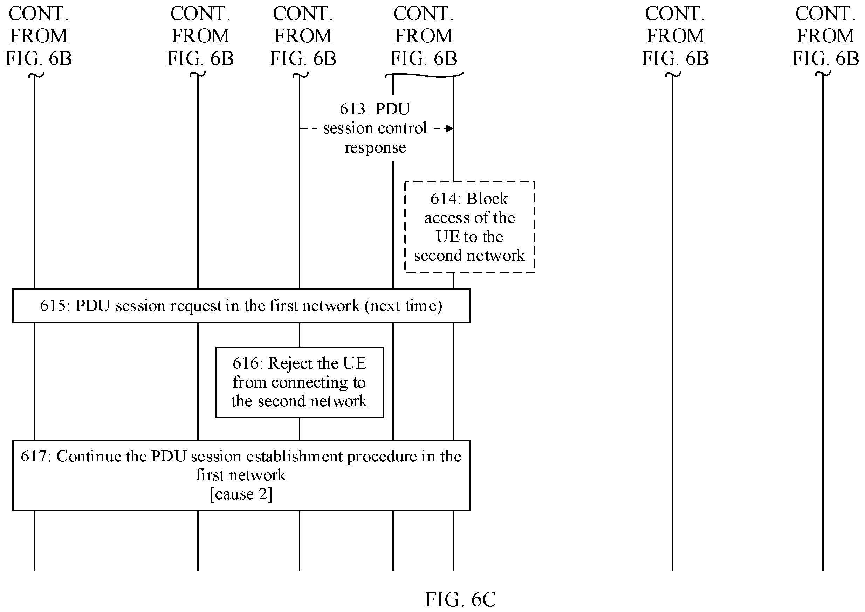

FIG. 6A to FIG. 6C show a method for enhancing cross-network access security according to an embodiment of this application. The method includes the following steps.

Step 601: UE connects to a first network.

Optionally, the UE needs to register with the first network, to obtain permission of obtaining a related service via the first network. In a UE registration procedure, the first network performs authentication/authentication on the UE. Optionally, a security credential for accessing the first network is configured on the UE. The UE discovers, selects, and connects to the first network by using the security credential of the first network.

Step 602: The UE establishes a PDU session in the first network.

The UE may request, in the first network, to establish the PDU session to a data network (Data Network, DN), and in a PDU session establishment procedure, a network element (for example, a UPF or an SMF) in the first network allocates an IP address to the UE.

Step 603: The UE determines an N3IWF of a second network.

Optionally, an IP address or a fully qualified domain name (fully qualified domain name, FQDN) of the N3IWF corresponding to the second network is preconfigured on the UE.

Step 604: The UE requests to register with the second network via the N3IWF of the second network, and triggers an authentication procedure.

In a possible implementation, the UE sends a registration request to a network element in the second network via the N3IWF of the second network, and triggers mutual authentication between the UE and the first network in the registration procedure. For specific implementation, refer to the conventional technology, for example, related descriptions of General Registration in section 4.2.2.2.2 of TS 23.502 V15.2.0 and related descriptions of Authentication procedures in section 6.1.3 of TS 33.501 V15.2.0. Details are not described herein.

Step 605: The network element in the second network determines that authentication on the UE fails, records an authentication result, and makes a corresponding decision.

In a possible implementation, an AUSF network element, an AMF network element, or the N3IWF in the second network determines that the authentication on the UE fails. In the conventional technology, the AUSF network element, the AMF network element, or the N3IWF network element in the second network returns an error indication to the UE, to notify the UE of the authentication failure. In this embodiment of this application, after determining that the authentication on the UE fails, the N3IWF network element or another network element in the second network (for example, the AUSF network element or the AMF network element in the second network) records a result of the authentication failure of the UE, and the N3IWF network element or the another network element in the second network determines, based on the previous authentication result of the UE, whether to prohibit the UE from accessing the second network. Optionally, a validity period may be set for prohibiting the UE from accessing the second network.

In a possible implementation, when the another network element in the second network (for example, the AUSF network element or the AMF network element in the second network) determines whether the authentication of the UE fails, the another network element in the second network notifies the N3IWF network element, so that the N3IWF network element determines that the authentication on the UE by the second network fails.

Optionally, the N3IWF network element or the another network element in the second network records a log of an authentication/authentication failure of any UE, and content of the recorded log may include an IP address of the UE, an identifier of the UE in the second network, and the like. If a quantity of authentication/authentication failures of UEs with a same IP address reaches a preset threshold within preset duration, the N3IWF network element or the another network element in the second network may make a decision of prohibiting the UEs corresponding to the IP address from accessing the second network.

Step 606: The network element in the second network sends an authentication/authentication response to the UPF network element in the first network.

In a possible implementation, the N3IWF in the second network sends the authentication response to the UPF in the first network. In another possible implementation, the N3IWF in the second network sends the authentication response to the UPF network element in the first network via an SMF network element in the second network.

The authentication response includes the IP address and a cause cause value. The cause is used to indicate to prohibit UE with the IP address from accessing the second network, and optionally, is further used to indicate a cause, for example, an authentication/authentication failure: why the UE with the IP address is prohibited from accessing the second network. Optionally, the authentication response further includes a validity period. The validity period is used to indicate information about a time in which the UE with the IP address is prohibited from accessing the second network. For example, the UE with the IP address is prohibited from accessing the second network within a specific time period or before a specific moment.

Step 607: The UPF network element in the first network sends the authentication/authentication response to the UE.

Optionally, the authentication/authentication response sent by the UPF network element in the first network to the UE includes indication information of the authentication failure the UE.

Step 608: The UPF network element in the first network sends a PDU session control request to an SMF network element that serves the PDU session of the UE in the first network.

Specifically, the PDU session control request includes information such as the IP address, the cause, and an identifier of the second network (SN_ID). Optionally, the PDU session control request further includes the validity period.

It should be noted that the authentication response in step 606 may not carry the IP address and the cause cause value, and is merely used to indicate that the authentication/authentication on the UE by second network fails. In this case, the PDU session control request in step 608 may be sent by the SMF network element in the second network to the SMF network element in the first network. Further, in step 605, after determining, based on the previous authentication result of the UE, that the UE needs to be prohibited from accessing the second network, the N3IWF network element in the second network or the another network element in the second network sends a decision result of prohibiting the UE from accessing the second network to the SMF network element in the second network. The SMF network element in the second network sends the PDU session control request to the SMF network element in the first network based on the decision result of prohibiting the UE from accessing the second network.

Step 609: The SMF network element that serves the PDU session of the UE in the first network receives the PDU session control request sent by the UPF network element in the first network, and stores information for prohibiting the UE from accessing the second network.

Optionally, the information for prohibiting the UE from accessing the second network includes the identifier of the UE and the identifier of the second network, and optionally, further includes the validity period.

In a possible implementation, the SMF network element maintains a blacklist, and each entry in the blacklist is used to record which UE is prohibited from accessing which network. Optionally, each entry in the blacklist further includes a validity period of the entry.

Optionally, the SMF network element that serves the PDU session of the UE in the first network further determines a type of the PDU session of the UE. When the PDU session of the UE is specifically used to access the second network, for example, a data network name (Data Network Name, DNN) corresponding to the PDU session of the UE carries information about the second network, step 610 is performed to release the PDU session of the UE, and steps 611 to 614 are skipped. When the PDU session of the UE is not specifically used to access the second network, for example, a data network name (Data Network Name, DNN) corresponding to the PDU session of the UE is a public data network (for example, the Internet), step 610 is skipped. Instead, steps 611 to 614 are performed. It should be noted that when the PDU session of the UE is not specifically used to access the second network, it indicates that in addition to being used by the UE to access the second network, the PDU session may further be used by the UE to obtain business/service data in a corresponding data network. In this case, if the PDU session is directly released, another service/service of the UE is affected. Therefore, the PDU session needs to be kept, but data/a message that is in the PDU session and that accesses the second network needs to be blocked. In a possible implementation, regardless of whether the PDU session is specifically used to access the second network, the UE skips step 610, and performs steps 611 to 614 instead.

Step 610: Release the PDU session of the UE.

For a PDU session release procedure, refer to the conventional technology, and details are not described herein. For example, refer to related descriptions of PDU Session Release in section 4.3.4 in TS 23.502 V15.2.0.

Step 611: The SMF network element initiates a PDU session management policy modification procedure.

Specifically, after determining that the UE needs to be stopped from accessing the second network, the SMF network element determines to modify the PDU session of the UE. Optionally, the SMF network element sends a session management policy update request (for example, an Npcf_SMPolicyControl_Update request) to a PCF network element in the first network. The session management policy update request is used to request the PCF network element to generate a session management policy for stopping the UE from accessing the second network.

The PCF network element generates a new session management policy based on the received session management policy update request, and sends the generated session management policy to the SMF network element. Optionally, the new session management policy includes a packet filter, where the packet filter is configured to block data/a request that is of the UE and that accesses the second network. For example, the packet filter includes the IP address and a destination address of the UE. Optionally, the packet filter further includes information such as a destination port and a transport layer protocol. The destination address may be an address of a network element in the second network, for example, may be the IP address of the N3IWF in the second network.

Step 612: The SMF network element initiates an N4 session update procedure of the UPF network element.

Specifically, the SMF network element sends an N4 session modification request message to the UPF network element, where the N4 session modification request message includes the packet filter. The UPF network element receives the N4 session modification request message sent by the SMF network element, and installs the packet filter.

Step 613: The SMF network element sends a PDU session control response to the UPF network element.

Specifically, the PDU session control response may be specifically an acknowledgment message, used to indicate that the SMF network element has successfully received the PDU session control request in step 608. Optionally, the acknowledgment message may be further used to indicate that the PDU session is successfully modified.

Step 614: The UPF network element blocks access of the UE to the second network based on the packet filter.

Specifically, the UPF network element may filter a data packet based on the packet filter, for example, may block the data packet based on a source address and a destination address of the data packet, to stop the UE from accessing the second network.

Step 615: The UE subsequently re-initiates a PDU session establishment request.

Step 616: The network element in the first network rejects the UE from accessing the second network.

Specifically, if the SMF network element determines, based on the blacklist, that the UE is not allowed to access the second network, and the PDU session that the UE requests to establish is specifically used to access the second network, the SMF network element rejects establishment of the PDU session in step 615. If the PDU session that the UE requests to establish is not specifically used to access the second network, steps 611 to 614 are performed, and the SMF restricts, on the UPF network element, data/a message of the UE to the second network.

Step 617: A subsequent procedure of PDU session establishment.

Optionally, if the SMF network element rejects the establishment of the PDU session in step 616, the SMF network element sends a PDU session rejection message to the UE. Optionally, the message may include a cause value for rejecting the establishment of the PDU session. Specifically, the SMF network element notifies, by using NAS SM signaling, the UE that the establishment of the PDU session is rejected. The NAS SM signaling may include a cause value for rejection, for example, rejection for the access to the second network.

Optionally, if the SMF network element determines, in step 616, that the PDU session that the UE requests to establish is not specifically used to access the second network, and steps 611 to 614 are performed, a subsequent PDU session establishment procedure may include sending a PDU session establishment success response message to the UE.

In this embodiment of this application, after the authentication of the UE fails, the network element of the second network records the authentication result of the UE, and when determining that the UE requests authentication/authentication for a plurality of times, the network element in the second network sends an indication for stopping the UE from continuing to access the second network to the network element in the first network. The network element in the first network releases the PDU session or modifies the PDU session. This can effectively prevent malicious UE from occupying resources of the first network and the second network, improve network efficiency, and prevent a DDoS attack on the second network.

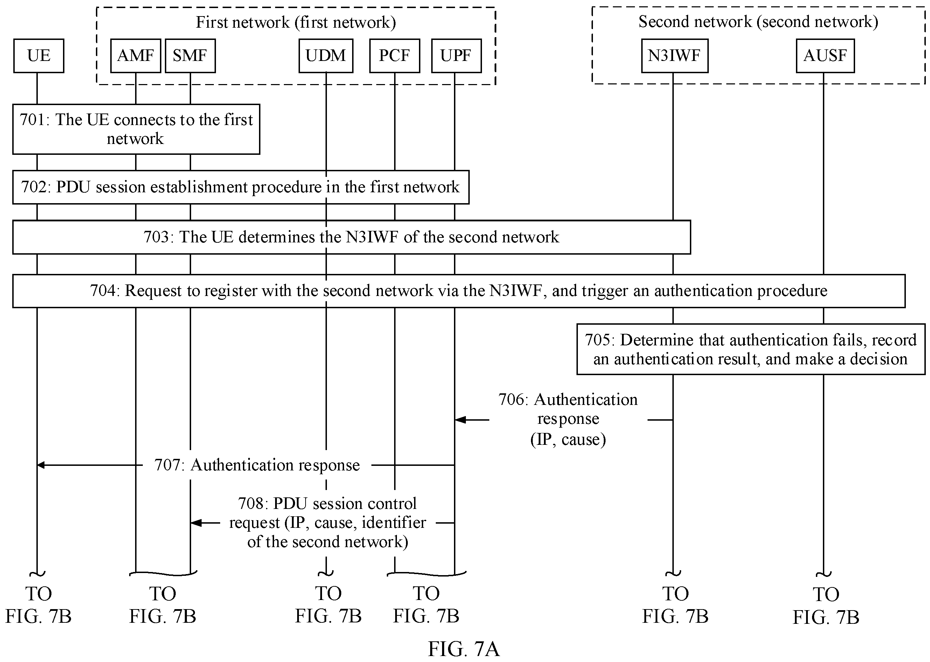

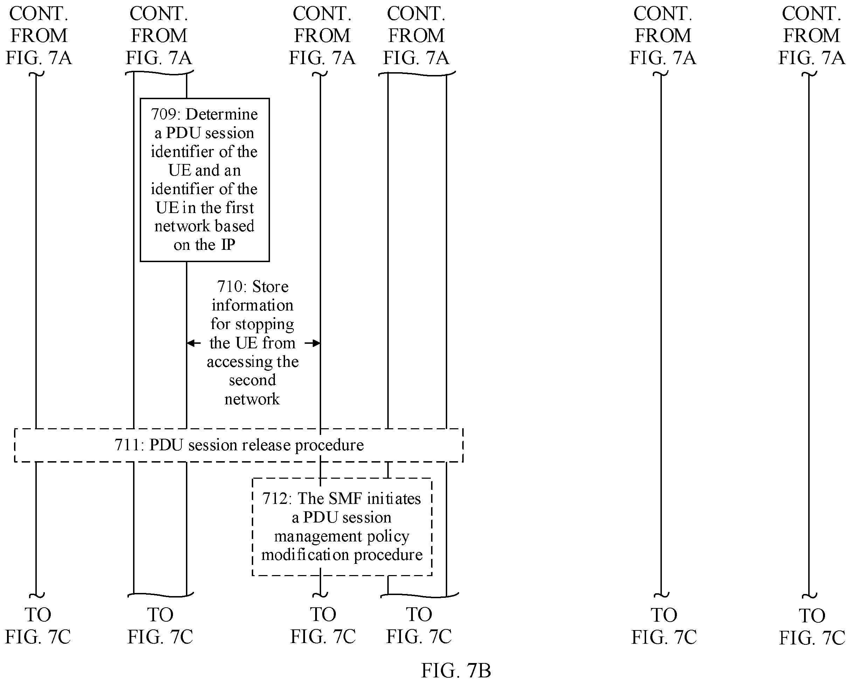

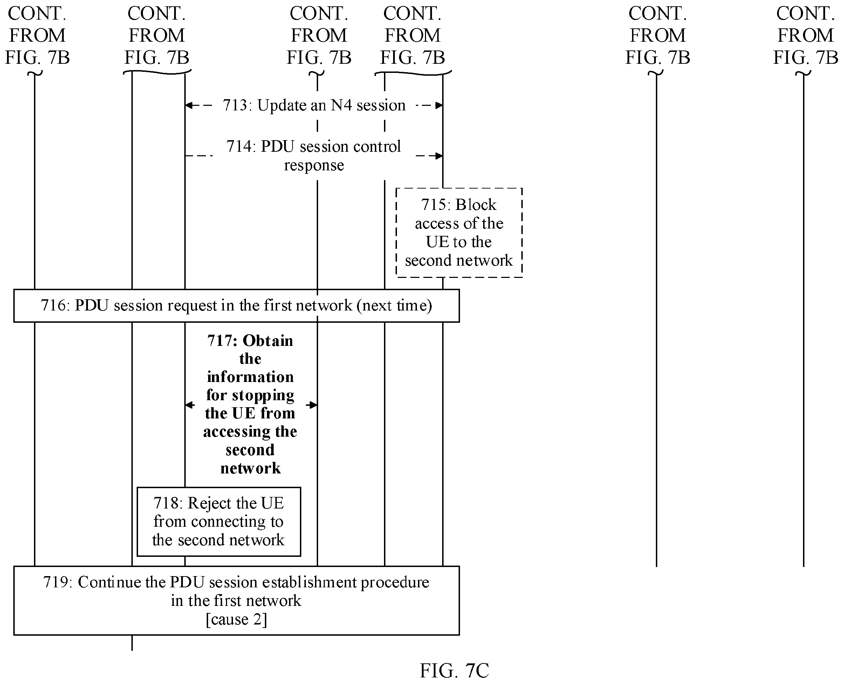

In the embodiment of FIG. 6A to FIG. 6C, the SMF network element in the first network stores the information (namely, the blacklist) for prohibiting the UE from accessing the second network, and the SMF also determines, based on the blacklist, whether specific UE is allowed to access the second network. As shown in FIG. 7A to FIG. 7C, in another method for enhancing cross-network access security according to an embodiment of this application, a UDM in a first network may store information (namely, a blacklist) for prohibiting UE from accessing a second network, and then an SMF network element determines, based on the blacklist, whether specific UE is allowed to access the second network. The method includes the following steps.

Step 701 to step 708 are respectively the same as steps 601 to 608 in the embodiment of FIG. 6A to FIG. 6C. For related content, refer to the foregoing embodiment, and details are not described herein again.

Step 709: An SMF network element that serves a PDU session of the UE in the first network receives a PDU session control request sent by a UPF network element in the first network.

Specifically, the SMF network element that serves the PDU session of the UE in the first network determines, based on a cause in the PDU session control request, that the second network prohibits the UE from accessing the second network; and determines a PDU session identifier of the UE and an identifier of the UE in the first network based on an IP address in the PDU session control request.

The SMF network element sends the identifier of the UE in the first network and an identifier of the second network to the UDM network element. Optionally, the SMF network element further sends a validity period to the UDM network element.

Optionally, the SMF network element that serves the PDU session of the UE in the first network further determines a type of the PDU session of the UE. When the PDU session of the UE is specifically used to access the second network, for example, a data network name (Data Network Name, DNN) corresponding to the PDU session of the UE carries information about the second network, step 711 is performed to release the PDU session of the UE, and steps 712 to 715 are skipped. When the PDU session of the UE is not specifically used to access the second network, for example, a data network name (Data Network Name, DNN) corresponding to the PDU session of the UE is a public data network (for example, the Internet), step 711 is skipped. Instead, steps 712 to 715 are performed. It should be noted that when the PDU session of the UE is not specifically used to access the second network, it indicates that in addition to being used by the UE to access the second network, the PDU session may further be used by the UE to obtain business/service data in a corresponding data network. In this case, if the PDU session is directly released, another service/service of the UE is affected. Therefore, the PDU session needs to be kept, but data/a message that is in the PDU session and that accesses the second network needs to be blocked. In a possible implementation, regardless of whether the PDU session is specifically used to access the second network, the UE skips step 711, and performs steps 712 to 715 instead.

Step 710: The SMF network element that serves the PDU session of the UE in the first network stores the information for prohibiting the UE from accessing the second network in the UDM network element.

Optionally, the SMF network element stores the information for prohibiting the UE from accessing the second network in subscription data of the UE in the UDM network element. Specifically, the UDM network element stores a blacklist in subscription data of each UE, and each entry in the blacklist is used to record a network to which the UE is prohibited from accessing. Optionally, each entry in the blacklist further includes a validity period of the entry.

Step 711 to step 716 are respectively the same as steps 610 to 615 in the embodiment of FIG. 6A to FIG. 6C. For related content, refer to the foregoing embodiment, and details are not described herein again.

Step 717: The SMF network element obtains the information for stopping the UE from accessing the second network from the UDM network element.

Specifically, the SMF network element may obtain the subscription data of the UE from the UDM network element in a PDU session establishment procedure, and obtain the information for stopping the UE from accessing the second network from the subscription data of the UE.

Step 718 and step 719 are respectively the same as steps 616 and 617 in the embodiment of FIG. 6A to FIG. 6C. For related content, refer to the foregoing embodiment, and details are not described herein again.

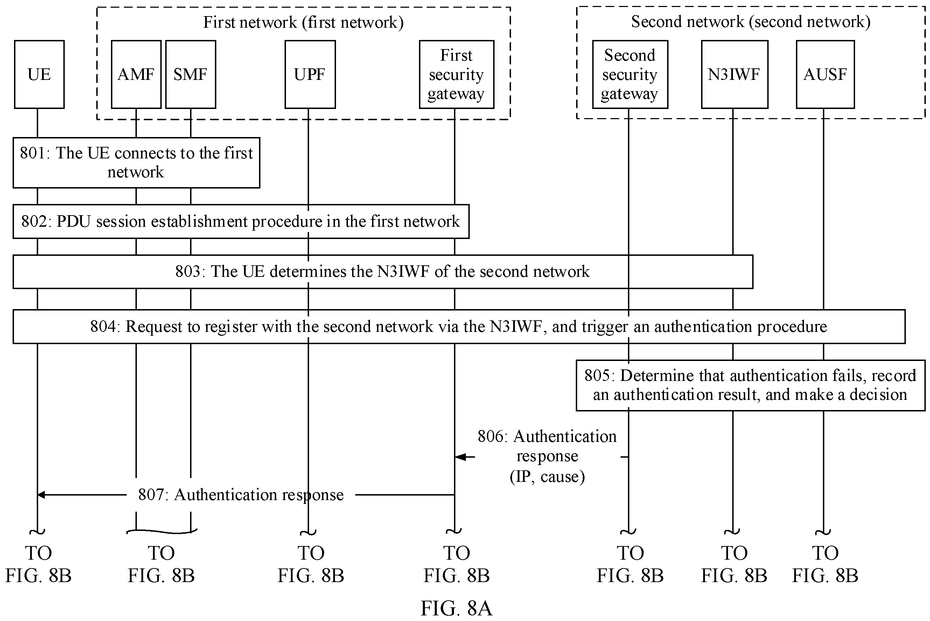

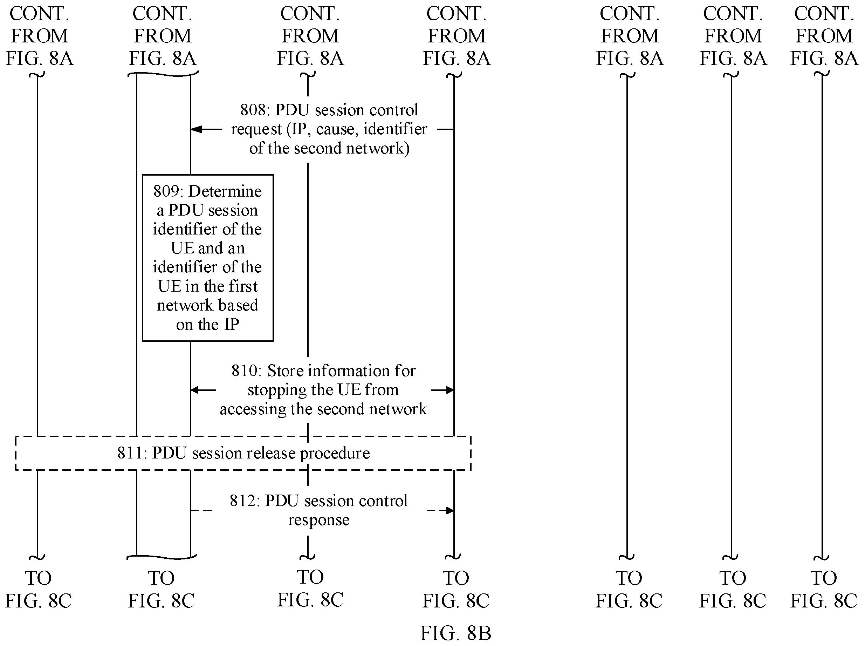

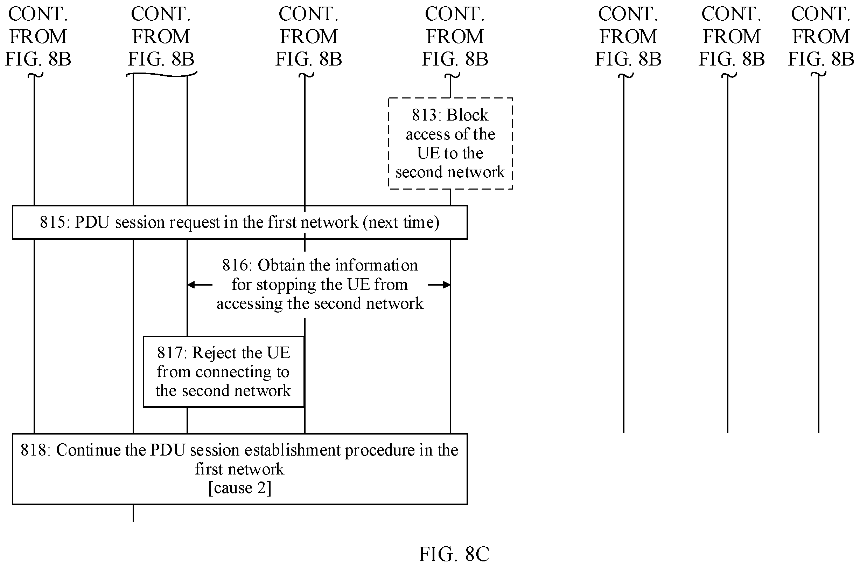

In the embodiment of FIG. 6A to FIG. 6C, the SMF network element in the first network stores the information (namely, the blacklist) for prohibiting the UE from accessing the second network, and the SMF also determines, based on the blacklist, whether specific UE is allowed to access the second network. As shown in FIG. 7A to FIG. 7C, the UDM in the first network may store the information (namely, the blacklist) for prohibiting the UE from accessing the second network, and then the SMF determines, based on the blacklist, whether specific UE is allowed to access the second network. In another method for enhancing cross-network access security described in FIG. 8A to FIG. 8C, one security gateway is deployed in each of a first network and a second network. For example, the security gateway may be a security edge protection proxy (security edge protection proxy, SEPP). The security gateway may be an independent network element, and functions thereof may be integrated into existing networks. The method includes the following steps.

Step 801 to step 805 are respectively the same as steps 701 to 705 in the embodiment of FIG. 7A to FIG. 7C. For related content, refer to the foregoing embodiment, and details are not described herein again.

Step 806 to step 809 are respectively the same as steps 706 to 709 in the embodiment of FIG. 7A to FIG. 7C. A difference lies in that an execution body of step 806 is replaced with the N3IWF in the second network in step 706 in FIG. 7A to a second security gateway in FIG. 8A to FIG. 8C, and an execution body of step 807 and step 808 is replaced with the UPF of the related steps in FIG. 7A to FIG. 7C to a first security gateway in FIG. 8A to FIG. 8C. For related content, refer to the foregoing embodiment, and details are not described herein again.

Step 810: An SMF network element that serves a PDU session of UE in the first network stores information for prohibiting the UE from accessing the second network in the first security gateway.

For specific description, refer to step 710 in the embodiment of FIG. 7A to FIG. 7C, provided that the UDM in step 710 is replaced with the first security gateway. Details are not described herein again.

Step 811 is the same as step 711 in the embodiment of FIG. 7A to FIG. 7C.

Step 812: The SMF network element sends the information for stopping the UE from accessing the second network to the first security gateway.

Optionally, the SMF network element sends a PDU session control response to the first security gateway, where the PDU session control response carries the information for stopping the UE from accessing the second network. The information for stopping the UE from accessing the second network may include, for example, information such as an identifier of the UE in the first network/an IP address and a destination IP address of the UE. Optionally, the information for prohibiting the UE from accessing the second network further includes information such as a destination port and a transport layer protocol. The destination address may be an address of a network element in the second network, for example, may be an IP address of an N3IWF in the second network or an address of the second security gateway.

Step 813: The first security gateway blocks access of the UE to the second network.

Step 815 is the same as step 716 in the embodiment of FIG. 7A to FIG. 7C.

Step 816: The SMF network element obtains, from the first security gateway, the information for stopping the UE from accessing the second network.

Step 817 and step 818 are respectively the same as steps 718 and 719 in the embodiment of FIG. 7A to FIG. 7C. For related content, refer to the foregoing embodiment, and details are not described herein again.

The foregoing describes in detail the method in the embodiments of this application. The following provides apparatuses in the embodiments of this application.

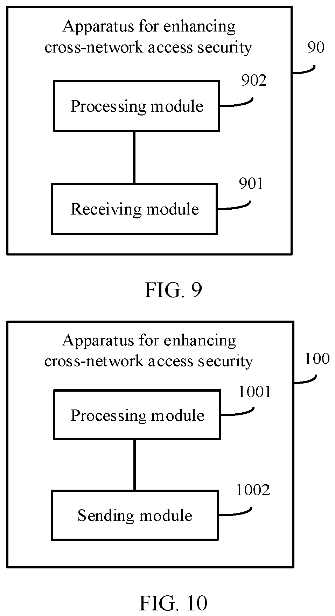

FIG. 9 is a schematic diagram of a logical structure of an apparatus for enhancing cross-network access security according to an embodiment of this application. The apparatus 90 is used by a terminal to access a second network by using a packet data unit PDU session established in a first network. The apparatus 90 may include a receiving module 901 and a processing module 902.

The receiving module 901 is configured to receive a first request message for the PDU session, where the first request message includes address information of the terminal, an identifier of the second network, and indication information for prohibiting the terminal from accessing the second network.

The processing module 902 is configured to store, based on the first request message, the information for prohibiting the terminal from accessing the second network.

The processing module 901 is further configured to block access of the terminal to the second network.

The information for prohibiting the terminal from accessing the second network includes an identifier of the terminal in the first network and the identifier of the second network; and that the processing unit 902 is configured to store the information for prohibiting the terminal from accessing the second network is specifically:
determining the identifier of the terminal in the first network based on the address information of the terminal; and
associating the identifier of the terminal in the first network with the identifier of the second network and storing the identifier of the terminal in the first network and the identifier of the second network.

Alternatively, that the processing unit 902 is configured to store the information for prohibiting the terminal from accessing the second network is specifically:
determining the identifier of the terminal in the first network based on the address information of the terminal; and
storing the information for prohibiting the terminal from accessing the second network in subscription data of the terminal and in a UDM network element in the first network, or storing the information for prohibiting the terminal from accessing the second network in a security gateway in the first network.

In a possible implementation, that the processing module 902 is configured to block access of the terminal to the second network includes: sending a second request message for blocking the terminal from accessing the second network to a user plane function network element that serves the PDU session in the first network, where the second request message indicates the user plane function network element to block the access of the terminal to the second network.

In another possible implementation, that the processing module 902 is configured to block access of the terminal to the second network includes: releasing the PDU session.

The processing module 902 is further configured to: when the terminal re-initiates a PDU session establishment request used to access the second network, block the access of the terminal to the second network based on the information for prohibiting the terminal from accessing the second network.

Optionally, the first request message further includes a validity period in which the terminal is prohibited from accessing the second network; and the information for prohibiting the terminal from accessing the second network further includes the validity period.

The apparatus 90 may implement functions of the SMF network element in the embodiments shown in FIG. 6A to FIG. 8C. For a detailed process performed by each module in the apparatus 90, refer to execution steps of the SMF network element in the embodiments shown in FIG. 6A to FIG. 8C. Details are not described herein again.

FIG. 10 is a schematic diagram of a logical structure of an apparatus for enhancing cross-network access security according to an embodiment of this application. The apparatus 100 is used by a terminal to access a second network by using a packet data unit PDU session established in a first network. The apparatus 100 may include a processing module 1001 and a sending module 1002.

The processing module 1001 is configured to: when authentication of the UE fails, record a result of the authentication failure.

The processing module 1001 is further configured to determine, based on the result of the authentication failure, to stop the terminal from accessing the second network.

The sending module 1002 is configured to send an authentication response to a network element in the first network, where the authentication response includes address information of the terminal and indication information for prohibiting the terminal from accessing the second network.

Optionally, the authentication response further includes a validity period in which the terminal is prohibited from accessing the second network.

That the processing module 1001 is configured to determine to stop the terminal from accessing the second network is specifically: determining that a quantity of authentication failures of the terminal is greater than a preset threshold.

Optionally, the apparatus is a non-3GPP interworking function N3IWF network element.

The apparatus 100 may implement functions of the N3IWF network element in the embodiments shown in FIG. 6A to FIG. 8C. For a detailed process performed by each module in the apparatus 100, refer to execution steps of the N3IWF network element in the embodiments shown in FIG. 6A to FIG. 8C. Details are not described herein again.

Any functional network element described in FIG. 4 and FIG. 5 in the embodiments of this application may be a network element in a hardware device, a software function running on dedicated hardware, or a virtualized function instantiated on a platform (for example, a cloud platform).

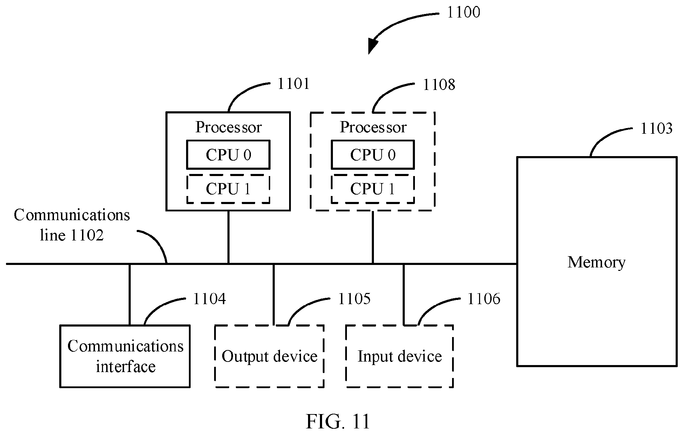

For example, any function network element described in Embodiments 4 and 5 of this application may be implemented by a communications device in FIG. 11. FIG. 11 is a schematic diagram of a hardware structure of a communications device according to an embodiment of this application. The communications device 1100 includes a processor 1101, a communications line 1102, a memory 1103, and at least one communications interface (descriptions are provided in FIG. 11 merely by using an example in which the communications device 1100 includes a communications interface 1104).

The processor 1101 may be a general-purpose central processing unit (central processing unit, CPU), a microprocessor, an application-specific integrated circuit (application-specific integrated circuit, ASIC), or one or more integrated circuits configured to control program execution of the solutions of this application.

The communications line 1102 may include a channel for transmitting information between the foregoing components.

The communications interface 1104 is any apparatus such as a transceiver, and is configured to communicate with another device or a communications network such as the Ethernet, a radio access network (radio access network, RAN), or a wireless local area network (wireless local area networks, WLAN).

The memory 1103 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disc storage, an optical disc storage (including a compressed optical disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that can be accessed by a computer, but is not limited thereto. The memory may exist independently, and be connected to the processor through the communications line 1102. The memory may be alternatively integrated with the processor.

The memory 1103 is configured to store computer-executable instructions for executing the solutions of this application, and the processor 1101 controls execution of the computer-executable instructions. The processor 1101 is configured to execute the computer-executable instructions stored in the memory 1103, to implement the method for enhancing cross-network access security provided in the Embodiments 6 to 8 of this application.

Optionally, the computer-executable instructions in this embodiment of this application may also be referred to as application program code. This is not specifically limited in this embodiment of this application.

During a specific implementation, in an embodiment, the processor 1101 may include one or more CPUs, for example, a CPU 0 and a CPU 1 in FIG. 11.

During a specific implementation, in an embodiment, the communications device 1100 may include a plurality of processors, for example, the processor 1101 and a processor 1108 in FIG. 11. Each of the processors may be a single-core (single-CPU) processor, or may be a multi-core (multi-CPU) processor. The processor herein may refer to one or more devices, circuits, and/or processing cores configured to process data (for example, computer program instructions).

During specific implementation, in an embodiment, the communications device 1100 may further include an output device 1105 and an input device 1106. The output device 1105 communicates with the processor 1101, and may display information in a plurality of manners. For example, the output device 405 may be a liquid crystal display (liquid crystal display, LCD), a light emitting diode (light emitting diode, LED) display device, a cathode ray tube (cathode ray tube, CRT) display device, or a projector (projector). The input device 1106 communicates with the processor 1101, and may receive user input in a plurality of manners. For example, the input device 1106 may be a mouse, a keyboard, a touchscreen device, or a sensing device.

The communications device 1100 may be a general-purpose device or a dedicated device. During specific implementation, the communications device 1100 may be a desktop computer, a portable computer, a network server, a palmtop computer (personal digital assistant, PDA), a mobile phone, a tablet computer, a wireless terminal device, an embedded device, or a device having a similar structure in FIG. 11. A type of the communications device 1100 is not limited in this embodiment of this application.

Optionally, an embodiment of this application further provides an apparatus (for example, the apparatus may be a chip system). The apparatus includes a processor, configured to support the method for enhancing cross-network access security described in FIG. 6A to FIG. 8C. In a possible design, the apparatus further includes a memory. The memory is configured to store program instructions and data that are necessary for a first session management network element. Certainly, the memory may alternatively not be in the apparatus. When the apparatus is the chip system, the apparatus may include a chip, or may include a chip and another discrete device. This is not specifically limited in this embodiment of this application.

All or some of the foregoing embodiments may be implemented by using software, hardware, firmware, or any combination thereof. When a software program is used to implement the embodiments, the embodiments may be implemented completely or partially in a form of a computer program product. The computer program product includes one or more computer instructions. When computer program instructions are loaded and executed on a computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

Although this application is described with reference to the embodiments, in a process of implementing this application that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce a better effect.

Although this application is described with reference to specific features and the embodiments thereof, it is clear that various modifications and combinations may be made to them without departing from the scope of this application. Correspondingly, the specification and accompanying drawings are merely example descriptions of this application defined by the appended claims, and are considered as any of or all modifications, variations, combinations or equivalents that cover the scope of this application. It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A method for enhancing cross-network access security, wherein the method is used by a terminal to access a second network by using a packet data unit PDU session established in a first network, and the method comprises:
requesting (604), by the terminal, to register with the second network, comprising sending a registration request to a network element in the second network to trigger an authentication procedure;
receiving (606), by a network element in the first network an authentication response from the network element in the second network when the network element in the second network determines that authentication fails, wherein the authentication response comprises information of the terminal, and indication information for prohibiting the terminal from accessing the second network;
**characterised in that** the method further comprises:
receiving (608), by a session management network element in the first network, a first request message for the PDU session sent from the network element in the first network, wherein the first request message comprises the address information of the terminal, an identifier of the second network, and the indication information for prohibiting the terminal from accessing the second network, and wherein the first request message is a PDU session control request;
storing (609), by the session management network element based on the first request message, the information for prohibiting the terminal from accessing the second network; and
blocking (615), by the session management network element when the session management element has determined that the PDU session that the terminal requests to establish is used to access the second network, access of the terminal to the second network.

2. The method according to claim 1, wherein the information for prohibiting the terminal from accessing the second network comprises an identifier of the terminal in the first network and the identifier of the second network; and the storing, by the session management network element based on the address information of the terminal, the identifier of the second network, and the indication information for prohibiting the terminal from accessing the second network, the information for prohibiting the terminal from accessing the second network is specifically:
determining the identifier of the terminal in the first network based on the address information of the terminal; and
associating the identifier of the terminal in the first network with the identifier of the second network and storing the identifier of the terminal in the first network and the identifier of the second network.

3. The method according to claim 1, wherein the information for prohibiting the terminal from accessing the second network comprises an identifier of the terminal in the first network and the identifier of the second network; and the storing, by the session management network element based on the address information of the terminal, the identifier of the second network, and the indication information for prohibiting the terminal from accessing the second network, the information for prohibiting the terminal from accessing the second network is specifically:
determining the identifier of the terminal in the first network based on the address information of the terminal; and
associating the identifier of the terminal in the first network with the identifier of the second network, and storing the identifier of the terminal in the first network and the identifier of the second network in subscription data of the terminal in a UDM network element in the first network, or storing the identifier of the terminal in the first network and the identifier of the second network in a security gateway in the first network.

4. The method according to any one of claims 1 to 3, wherein the blocking access of the terminal to the second network comprises:
sending, by the session management network element, a second request message for blocking the terminal from accessing the second network to a user plane function network element that serves the PDU session in the first network; and
blocking, by the user plane function network element, the access of the terminal to the second network based on the second request message.

5. The method according to any one of claims 1 to 3, wherein the blocking access of the terminal to the second network comprises:
releasing, by the session management network element, the PDU session.

6. The method according to any one of claims 1 to 5, wherein the method further comprises:
when the terminal re-initiates a PDU session establishment request used to access the second network, blocking the access of the terminal to the second network based on the information for prohibiting the terminal from accessing the second network.

7. The method according to any one of claims 1 to 6, wherein the first request message further comprises a validity period in which the terminal is prohibited from accessing the second network; and the information for prohibiting the terminal from accessing the second network further comprises the validity period.

8. A computer storage medium, wherein the computer-readable storage medium stores instructions, and when the instructions are run on a computer, the computer is enabled to perform the method according to any one of claims 1 to 7.

9. A system for enhancing cross-network access security, wherein the system is used by a terminal to access a second network by using a packet data unit PDU session established in a first network, wherein:
the terminal is configure to request (604) to register with the second network, comprising send a registration request to a network element in the second network to trigger an authentication procedure;
a network element in the first network is configured to receive (606) an authentication response from the network element in the second network when the network element in the second network determines that authentication fails, wherein the authentication response comprises information of the terminal, and indication information for prohibiting the terminal from accessing the second network;
**characterised in that**:
a session management network element in the first network is configured to receive (608) a first request message for the PDU session sent from the network element in the first network, wherein the first request message comprises the address information of the terminal, an identifier of the second network, and the indication information for prohibiting the terminal from accessing the second network, and wherein the first request message is a PDU session control request;
the session management network element is configured to store (609), based on the first request message, the information for prohibiting the terminal from accessing the second network; and
the session management network element is configured to block (615), when the session management element has determined that the PDU session that the terminal requests to establish is used to access the second network, access of the terminal to the second network.

## Patentansprüche

1. Verfahren zum Verbessern einer netzwerkübergreifenden Zugriffssicherheit, wobei das Verfahren durch ein Endgerät dazu verwendet wird, unter Verwendung einer Paketdateneinheitssitzung, PDU-Sitzung, die in einem ersten Netzwerk aufgebaut wird, auf ein zweites Netzwerk zuzugreifen, und das Verfahren Folgendes umfasst:
Anfordern (604), durch das Endgerät, sich bei dem zweiten Netzwerk anzumelden, umfassend Senden einer Anmeldungsanforderung an ein Netzwerkelement in dem zweiten Netzwerk, um eine Authentifizierungsprozedur auszulösen;
Empfangen (606), durch ein Netzwerkelement in dem ersten Netzwerk, einer Authentifizierungsantwort von dem Netzwerkelement in dem zweiten Netzwerk, wenn das Netzwerkelement in dem zweiten Netzwerk bestimmt, dass die Authentifizierung fehlschlägt, wobei die Authentifizierungsantwort Informationen des Endgeräts und Angabeinformationen zum Hindern des Endgeräts daran, auf das zweite Netzwerk zuzugreifen, umfasst;
**dadurch gekennzeichnet, dass** das Verfahren ferner Folgendes umfasst:
Empfangen (608), durch ein Sitzungsverwaltungsnetzwerkelement in dem ersten Netzwerk, einer ersten Anforderungsnachricht für die PDU-Sitzung, die aus dem Netzwerkelement in dem ersten Netzwerk gesendet wird, wobei die erste Anforderungsnachricht die Adressinformationen des Endgeräts, eine Kennung des zweiten Netzwerks und die Angabeinformationen zum Hindern des Endgeräts daran, auf das zweite Netzwerk zuzugreifen, umfasst und wobei die erste Anforderungsnachricht eine PDU-Sitzungssteuerungsanforderung ist;
Speichern (609), durch das Sitzungsverwaltungsnetzwerkelement basierend auf der ersten Anforderungsnachricht, der Informationen zum Hindern des Endgeräts daran, auf das zweite Netzwerk zuzugreifen; und
Blockieren (615), durch das Sitzungsverwaltungsnetzwerkelement, wenn das Sitzungsverwaltungselement bestimmt hat, dass die PDU-Sitzung, die das Endgerät anfordert, aufzubauen, dazu verwendet wird, auf das zweite Netzwerk zuzugreifen, des Zugriffs des Endgeräts auf das zweite Netzwerk.

2. Verfahren nach Anspruch 1, wobei die Informationen zum Hindern des Endgeräts daran, auf das zweite Netzwerk zuzugreifen, eine Kennung des Endgeräts in dem ersten Netzwerk und die Kennung des zweiten Netzwerks umfassen; und das Speichern, durch das Sitzungsverwaltungsnetzwerkelement basierend auf den Adressinformationen des Endgeräts, der Kennung des zweiten Netzwerks und den Angabeinformationen zum Hindern des Endgeräts daran, auf das zweite Netzwerk zuzugreifen, der Informationen zum Hindern des Endgeräts daran, auf das zweite Netzwerk zuzugreifen, speziell Folgendes ist:
Bestimmen der Kennung des Endgeräts in dem ersten Netzwerk basierend auf den Adressinformationen des Endgeräts; und
Zuordnen der Kennung des Endgeräts in dem ersten Netzwerk zu der Kennung des zweiten Netzwerks und Speichern der Kennung des Endgeräts in dem ersten Netzwerk und der Kennung des zweiten Netzwerks.

3. Verfahren nach Anspruch 1, wobei die Informationen zum Hindern des Endgeräts daran, auf das zweite Netzwerk zuzugreifen, eine Kennung des Endgeräts in dem ersten Netzwerk und die Kennung des zweiten Netzwerks umfassen; und das Speichern, durch das Sitzungsverwaltungsnetzwerkelement basierend auf den Adressinformationen des Endgeräts, der Kennung des zweiten Netzwerks und den Angabeinformationen zum Hindern des Endgeräts daran, auf das zweite Netzwerk zuzugreifen, der Informationen zum Hindern des Endgeräts daran, auf das zweite Netzwerk zuzugreifen, speziell Folgendes ist:
Bestimmen der Kennung des Endgeräts in dem ersten Netzwerk basierend auf den Adressinformationen des Endgeräts; und
Zuordnen der Kennung des Endgeräts in dem ersten Netzwerk zu der Kennung des zweiten Netzwerks und Speichern der Kennung des Endgeräts in dem ersten Netzwerk und der Kennung des zweiten Netzwerks in Abonnementdaten des Endgeräts in einem UDM-Netzwerkelement in dem ersten Netzwerk oder Speichern der Kennung des Endgeräts in dem ersten Netzwerk und der Kennung des zweiten Netzwerks in einem Sicherheitsgateway in dem ersten Netzwerk.

4. Verfahren nach einem der Ansprüche 1 bis 3, wobei das Blockieren des Zugriffs des Endgeräts auf das zweite Netzwerk Folgendes umfasst:
Senden, durch das Sitzungsverwaltungsnetzwerkelement, einer zweiten Anforderungsnachricht zum Blockieren des Endgeräts, auf das zweite Netzwerk zuzugreifen, an ein Benutzerebenenfunktionsnetzwerkelement, das die PDU-Sitzung in dem ersten Netzwerk bedient; und
Blockieren, durch das Benutzerebenenfunktionsnetzwerkelement, des Zugriffs des Endgeräts auf das zweite Netzwerk basierend auf der zweiten Anforderungsnachricht.

5. Verfahren nach einem der Ansprüche 1 bis 3, wobei das Blockieren des Zugriffs des Endgeräts auf das zweite Netzwerk Folgendes umfasst:
Freigeben, durch das Sitzungsverwaltungsnetzwerkelement, der PDU-Sitzung.

6. Verfahren nach einem der Ansprüche 1 bis 5, wobei das Verfahren ferner Folgendes umfasst:
wenn das Endgerät eine PDU-Sitzungsaufbauanforderung, die dazu verwendet wird, auf das zweite Netzwerk zuzugreifen, erneut initiiert, Blockieren des Zugriffs des Endgeräts auf das zweite Netzwerk basierend auf den Informationen zum Hindern des Endgeräts daran, auf das zweite Netzwerk zuzugreifen.

7. Verfahren nach einem der Ansprüche 1 bis 6, wobei die erste Anforderungsnachricht ferner einen Gültigkeitszeitraum umfasst, in dem das Endgerät daran gehindert wird, auf das zweite Netzwerk zuzugreifen; und die Informationen zum Hindern des Endgeräts daran, auf das zweite Netzwerk zuzugreifen, ferner den Gültigkeitszeitraum umfassen.

8. Computerspeichermedium, wobei das computerlesbare Speichermedium Anweisungen speichert und, wenn die Anweisungen auf einem Computer ausgeführt werden, es dem Computer ermöglicht wird, das Verfahren nach einem der Ansprüche 1 bis 7 durchzuführen.

9. System zum Verbessern einer netzwerkübergreifenden Zugriffssicherheit, wobei das System durch ein Endgerät dazu verwendet wird, unter Verwendung einer Paketdateneinheitssitzung, PDU-Sitzung, die in einem ersten Netzwerk aufgebaut wird, auf ein zweites Netzwerk zuzugreifen, wobei:
das Endgerät dazu konfiguriert ist, anzufordern (604), sich bei dem zweiten Netzwerk anzumelden, umfassend Senden einer Anmeldungsanforderung an ein Netzwerkelement in dem zweiten Netzwerk, um eine Authentifizierungsprozedur auszulösen;
ein Netzwerkelement in dem ersten Netzwerk dazu konfiguriert ist, eine Authentifizierungsantwort von dem Netzwerkelement in dem zweiten Netzwerk zu empfangen (606), wenn das Netzwerkelement in dem zweiten Netzwerk bestimmt, dass die Authentifizierung fehlschlägt, wobei die Authentifizierungsantwort Informationen des Endgeräts und Angabeinformationen zum Hindern des Endgeräts daran, auf das zweite Netzwerk zuzugreifen, umfasst;
**dadurch gekennzeichnet, dass**:
ein Sitzungsverwaltungsnetzwerkelement in dem ersten Netzwerk dazu konfiguriert ist, eine erste Anforderungsnachricht für die PDU-Sitzung zu empfangen (608), die aus dem Netzwerkelement in dem ersten Netzwerk gesendet wird, wobei die erste Anforderungsnachricht die Adressinformationen des Endgeräts, eine Kennung des zweiten Netzwerks und die Angabeinformationen zum Hindern des Endgeräts daran, auf das zweite Netzwerk zuzugreifen, umfasst und wobei die erste Anforderungsnachricht eine PDU-Sitzungssteuerungsanforderung ist;
das Sitzungsverwaltungsnetzwerkelement dazu konfiguriert ist, basierend auf der ersten Anforderungsnachricht die Informationen zum Hindern des Endgeräts daran, auf das zweite Netzwerk zuzugreifen, zu speichern (609); und
das Sitzungsverwaltungsnetzwerkelement dazu konfiguriert ist, wenn das Sitzungsverwaltungselement bestimmt hat, dass die PDU-Sitzung, die das Endgerät anfordert, aufzubauen, dazu verwendet wird, auf das zweite Netzwerk zuzugreifen, den Zugriff des Endgeräts auf das zweite Netzwerk zu blockieren (615).

## Revendications

1. Procédé d'amélioration de la sécurité d'accès inter-réseaux, dans lequel le procédé est utilisé par un terminal pour accéder à un second réseau à l'aide d'une session d'unité de données par paquets, PDU, établie dans un premier réseau, et le procédé comprend :
la demande (604), par le terminal, de s'enregistrer auprès du second réseau, comprenant l'envoi d'une demande d'enregistrement à un élément de réseau dans le second réseau pour déclencher une procédure d'authentification ;
la réception (606), par un élément de réseau dans le premier réseau, d'une réponse d'authentification provenant de l'élément de réseau dans le second réseau lorsque l'élément de réseau dans le second réseau détermine que l'authentification échoue, dans lequel la réponse d'authentification comprend des informations du terminal, et des informations d'indication pour interdire au terminal d'accéder au second réseau ;
**caractérisé en ce que** le procédé comprend également :
la réception (608), par un élément de réseau de gestion de session dans le premier réseau, d'un premier message de demande pour la session PDU envoyé par l'élément de réseau dans le premier réseau, dans lequel le premier message de demande comprend les informations d'adresse du terminal, un identifiant du second réseau, et les informations d'indication pour interdire au terminal d'accéder au second réseau, et dans lequel le premier message de demande est une demande de commande de session PDU ;
le stockage (609), par l'élément de réseau de gestion de session sur la base du premier message de demande, des informations pour interdire au terminal d'accéder au second réseau ; et
le blocage (615), par l'élément de réseau de gestion de session lorsque l'élément de gestion de session a déterminé que la session PDU que le terminal demande à établir est utilisée pour accéder au second réseau, de l'accès du terminal au second réseau.

2. Procédé selon la revendication 1, dans lequel les informations pour interdire au terminal d'accéder au second réseau comprennent un identifiant du terminal dans le premier réseau et l'identifiant du second réseau ; et le stockage, par l'élément de réseau de gestion de session, sur la base des informations d'adresse du terminal, de l'identifiant du second réseau, et des informations d'indication pour interdire au terminal d'accéder au second réseau, les informations pour interdire au terminal d'accéder au second réseau sont spécifiquement :
la détermination de l'identifiant du terminal dans le premier réseau sur la base des informations d'adresse du terminal ; et
l'association de l'identifiant du terminal dans le premier réseau à l'identifiant du second réseau et le stockage de l'identifiant du terminal dans le premier réseau et de l'identifiant du second réseau.

3. Procédé selon la revendication 1, dans lequel les informations pour interdire au terminal d'accéder au second réseau comprennent un identifiant du terminal dans le premier réseau et l'identifiant du second réseau ; et le stockage, par l'élément de réseau de gestion de session, sur la base des informations d'adresse du terminal, de l'identifiant du second réseau, et des informations d'indication pour interdire au terminal d'accéder au second réseau, les informations pour interdire au terminal d'accéder au second réseau sont spécifiquement :
la détermination de l'identifiant du terminal dans le premier réseau sur la base des informations d'adresse du terminal ; et
l'association de l'identifiant du terminal dans le premier réseau à l'identifiant du second réseau, et le stockage de l'identifiant du terminal dans le premier réseau et de l'identifiant du second réseau dans les données d'abonnement du terminal dans un élément de réseau UDM dans le premier réseau, ou le stockage de l'identifiant du terminal dans le premier réseau et de l'identifiant du second réseau dans une passerelle de sécurité dans le premier réseau.

4. Procédé selon l'une quelconque des revendications 1 à 3, dans lequel le blocage de l'accès du terminal au second réseau comprend :
l'envoi, par l'élément de réseau de gestion de session, d'un second message de demande pour bloquer l'accès du terminal au second réseau à un élément de réseau de fonction de plan utilisateur qui sert la session PDU dans le premier réseau ; et
le blocage, par l'élément de réseau de fonction de plan utilisateur, de l'accès du terminal au second réseau sur la base du second message de demande.

5. Procédé selon l'une quelconque des revendications 1 à 3, dans lequel le blocage de l'accès du terminal au second réseau comprend :
la libération, par l'élément de réseau de gestion de session, de la session PDU.

6. Procédé selon l'une quelconque des revendications 1 à 5, dans lequel le procédé comprend également :
lorsque le terminal ré-initialise une demande d'établissement de session PDU utilisée pour accéder au second réseau, le blocage de l'accès du terminal au second réseau sur la base des informations pour interdire au terminal d'accéder au second réseau.

7. Procédé selon l'une quelconque des revendications 1 à 6, dans lequel le premier message de demande comprend également une période de validité pendant laquelle le terminal est interdit d'accès au second réseau ; et les informations pour interdire au terminal d'accéder au second réseau comprennent également la période de validité.

8. Support de stockage informatique, dans lequel le support de stockage lisible par ordinateur stocke des instructions, et lorsque les instructions sont exécutées sur un ordinateur, l'ordinateur est activé pour réaliser le procédé selon l'une quelconque des revendications 1 à 7.

9. Système d'amélioration de la sécurité d'accès inter-réseaux, dans lequel le système est utilisé par un terminal pour accéder à un second réseau à l'aide d'une session d'unité de données par paquets, PDU, établie dans un premier réseau, dans lequel :
le terminal est configuré pour demander (604) de s'enregistrer auprès du second réseau, comprenant l'envoi d'une demande d'enregistrement à un élément de réseau dans le second réseau pour déclencher une procédure d'authentification ;
un élément de réseau dans le premier réseau est configuré pour recevoir (606) une réponse d'authentification provenant de l'élément de réseau dans le second réseau lorsque l'élément de réseau dans le second réseau détermine que l'authentification échoue, dans lequel la réponse d'authentification comprend des informations du terminal, et des informations d'indication pour interdire au terminal d'accéder au second réseau ;
**caractérisé en ce que** :
un élément de réseau de gestion de session dans le premier réseau est configuré pour recevoir (608) un premier message de demande pour la session PDU envoyé par l'élément de réseau dans le premier réseau, dans lequel le premier message de demande comprend les informations d'adresse du terminal, un identifiant du second réseau, et les informations d'indication pour interdire au terminal d'accéder au second réseau, et dans lequel le premier message de demande est une demande de commande de session PDU ;
l'élément de réseau de gestion de session est configuré pour stocker (609) sur la base du premier message de demande, des informations pour interdire au terminal d'accéder au second réseau ; et
l'élément de réseau de gestion de session est configuré pour bloquer (615), lorsque l'élément de gestion de session a déterminé que la session PDU que le terminal demande à établir est utilisée pour accéder au second réseau, l'accès du terminal au second réseau.
